(19) Europäisches Patentamt
European Patent Office
Office européen des brevets

(11) **EP 2 635 362 B1**

(12) **EUROPEAN PATENT SPECIFICATION**

(45) Date of publication and mention
of the grant of the patent:
**03.09.2014 Bulletin 2014/36**

(51) Int Cl.:
**B01D 39/20** *(2006.01)*   **B01D 39/08** *(2006.01)*
**B01D 39/16** *(2006.01)*

(21) Application number: **11770735.6**

(22) Date of filing: **11.10.2011**

(86) International application number:
**PCT/EP2011/067690**

(87) International publication number:
**WO 2012/059299 (10.05.2012 Gazette 2012/19)**

(54) **A PROCESS FOR MAKING A FILTER BLOCK CUM SEDIMENT FILTER**

VERFAHREN ZUR HERSTELLUNG EINES SEDIMENTFILTERS MIT EINGEBAUTEM FILTERBLOCK

PROCÉDÉ DE FABRICATION D'UN BLOC DE FILTRATION COMPORTANT UN FILTRE À SÉDIMENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2010 EP 10195083**
**01.11.2010 IN MU30232010**

(43) Date of publication of application:
**11.09.2013 Bulletin 2013/37**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London EC4Y 0DN (GB)**
Designated Contracting States:
**CY GB IE MT**

(72) Inventors:
• **CHATTERJEE, Jaideep**
**Bangalore 560 066 (IN)**
• **GUPTA, Santosh, Kumar**
**Bangalore 560 066 (IN)**
• **RAMACHANDRAN, Rajeesh, Kumar**
**Bangalore 560 066 (IN)**

(74) Representative: **Rosen Jacobson, Frans Lucas M.**
**Unilever Patent Group**
**Olivier van Noortlaan 120**
**3133 AT Vlaardingen (NL)**

(56) References cited:
**EP-A1- 2 161 067    GB-A- 2 390 987**
**US-B1- 6 368 504**

## Description

### FIELD OF INVENTION

The present invention relates to a process for making a filter block cum sediment filter particularly to a filter block, for use in gravity-fed filtration units, which provides for filtering particulate contaminants and also have relatively high flow rates and enhanced life. According to another aspect, the present invention relates to filter blocks cum sediment filter obtained by such process.

### BACKGROUND AND RELATED ART

Any discussion of the prior art throughout the specification should in no way be considered as an admission that such prior art is widely known or forms part of the common general knowledge in the field.

There are many impurities that have been identified in water, which have to be removed in order to make it safe and palatable for human consumption. Such impurities include particulate water insoluble solids, dissolved salts and organic compounds like industrial chemicals, pesticides and its residues and harmful microorganisms like cysts, protozoa, bacteria and virus.

In many cases such as drinking water and the like it is desirable to remove the harmful contaminants from the fluids. Importantly, in case of drinking water, the removal of contaminants is a necessity to maintain proper hygiene and safe conditions for consumption of such water.

Typically, a self-contained system for domestic application usually has an upper and a lower chamber separated by a filter cartridge wherein the water to be treated is poured in the upper chamber and allowed to flow by gravity through the cartridge to the store in the lower chamber as the treated water for dispensing for consumption as and when desired. Such filter cartridges are known to use activated carbon to remove bad taste and odour from water as well as chlorine and other reactive chemicals. Use of ion exchange resin for removing metal and other ions from water is also known.

Use of a combination of carbon filter block and synthetic or natural fibrous media filters for purification of water in a gravity fed filtration device is known in the art. The fibrous filter, also known as 'sediment filters', generally have pore size larger than the carbon block. Sediment filters are placed in the path of fluid before the carbon filter block. This provides to remove larger particulate matter from the input water. The filter block which is placed after the sediment filter removes the fine particulates, organics and cysts from the water to be purified. The pre-removal of the larger particles by the sediment filter provides longer life to the filter block. However, a disadvantage in using this combination is the problem of development of air gaps between the carbon block filter and the fabric filter thereby affecting the flow rate and reducing the efficiency of the filter block.

GB2390987 (2004, Unilever Plc), discloses a particulate carbon block filter medium adapted for use in gravity fed filters. The filter comprises of a high surface area carbon block filter medium comprising of powdered activated carbon (PAC) having particle size in the range of 6 to 325 mesh and a binder material having low surface coverage of 0.5% to 10% and which is hydrophilic and/or of reduced hydrophobicity. It also discloses that the particulate carbon block filter may be used along a sediment filter such as a washable or replaceable fabric filter for removing fine dust and other micro-particulates. The shapes of the particulate carbon block filter medium may include a flat circular disc of low thickness, a square disc of low thickness, a low height tapered flat disc, a cylinder, a solid cone or a hollow cone. The thickness of the carbon block filter medium is suitably upto 10mm. The problem of developing air gaps does not arise with curved surfaces having a thickness of the order less than 10mm and may be covered with a fabric filter by wrapping the filter on to the perimeter of the filter block.

IN 195421 (2004, Forbes Aquatech), however, specifically mentions that the carbon block filtration means and the releasably secured sediment filter that externally surrounds the carbon block is without contacting the latter. The flow problems through the carbon block and the sediment filter is solved by ensuring the specific disposition of the sediment filter with respect to the carbon block. There is sufficient gap between the carbon block and the sediment filter. The sediment filter is provided with a plastic frame support and a hole at the top which allows entrapped air to escape out. These features together remove the problem of development of air gaps.

It is observed that generally the air gap created between the carbon block filter and the fabric filter affects the flow rate of water and also many times the water bypasses the fabric filter and directly passes through the carbon block. This will speed up the clogging of the carbon block filter and thus bring down the efficiency of the same and also will increase the number of interventions required to rejuvenate the filter.

WO2005094966 (2005, Unilever N V), discloses a water filter having a washable or replaceable sediment filter for removing fine dust and other particulates above 3 $\mu$m, a carbon block filter medium comprising the PAC and the binder material; a base plate with an orifice for water exit, to which the carbon block is attached; and a housing or cover to hold the entire filter as one integral unit. It is known that hemispherical shape of the filter is the optimum shape for a filter.

Attempts have been made in the past to hold the carbon block and the sediment filter together by providing a housing but this still poses a problem for the optimum shaped block which is hemispherical in that the chances of bypassing the fabric filter is not completely avoided and possibility of air-trapping remained a problem.

EP2161067 (2010, Unilever N V), discloses a hemispherical filter block made of granular activated carbon particles having first and second layer are integrally bonded together. First layer and second layer can consist of same granular particles but with different particle sizes. This block is prepared by mixing particles of the respective mesh size with a binder in the presence of water to prepare a moist first layer mixture and separately mixing particles of the second layer mixture and stamping each later sequentially and then heating the two layers to the desired temperature followed by demoulding to get the desired filter block. The moulding and demoulding process for both the layers are in a single step.

The present invention aims at providing a process for making a shaped sediment filter made up of fabric over a hemispherical shaped bound filter block where the shaped fabric filter fits integrally over the hemispherically shaped bound filter block. Such a fabric filter helps in removing fine dust and other particulates. EP2161067, also mentions providing optionally a washable or replaceable sediment filter for removing fine dust and other particulates generally above 3 microns upstream of the carbon block filter. However, this does not disclose the construction of a fabric layer that is integrally fitted with the filter block thereby solving the problem associated with bypassing the fabric layer which leads to clogging of the filter block.

The present inventors have been able to solve this problem by providing a fabric layer over the hemispherical shaped bound filter block ensuring that the fabric layer is integrally fitted on the bound block. The filter block according to the present invention solves the problem of water bypassing the sediment filter and thus preventing clogging of the filter block. This also solves the problem of the requirement of frequent rejuvenation of the filter. Thus the present configuration avoids the use of housing which is used in the prior art for either for providing the gap between the filter block and the sediment filter or holding it integrally together. It is particularly difficult to shape the fabric sediment filter to match the shape of the hemispherical filter block which is considered to be the optimal shape for use in water filtration.

In preparing such integrally fitted block there is a problem if one aims to mould the filter block and the fabric together. While preparing the filter blocks the blocks have to be raised to a very high temperature at which temperature the fabric properties will be affected. The fabric will have to be moulded first under pressure and heat and then the filter block and the fabric are integrated together.

It is thus an object of present invention to provide a process for making a bound filter block with a sediment filter integrally fitted on its outer surface for use in gravity-fed filtration units.

It is an object of the present invention to provide a sediment filter integrally fitted on to a hemispherical bound filter block such that there is no air gap between the entire exterior surface of the bound block and the fibrous fabric filter media.

It is another object of present invention is to provide a bound filter block with a sediment filter integrally fitted on its outer surface that provide for filtering particulate contaminants in a gravity-fed filtration unit.

Yet another object of the invention is to provide a gravity fed purification unit that provides relatively high flow rates and avoiding water bypassing the sediment filter.

## SUMMARY OF THE INVENTION

According to the first aspect the invention there is provided a process for making a filter block cum sediment filter comprising:

> i. moulding a filter block of a particular shape and dimension
> ii. moulding a woven or non-woven fabric, having micro-pores with an average pore size in the range of 1 to 400 micrometers, into a shape corresponding to the shape and dimension of the moulded filter block by shaping the fabric in the mould and heating it to temperature in the range 50 to 120°C for 10 to 30 minutes and compressing it under pressure in the range 5 to 10 kg/cm$^2$;
> iii. cooling the mould to a temperature in the range 20 to 40°C;
> iv. inserting the moulded filter block into the moulded fabric; and
> v. fixing the filter block covered by the fabric layer to a base plate.

According to the second aspect the invention there is provided a filter block cum sediment filter, including shaped filter block comprising particulate filter media bound together with a binder wherein the filter block is integrally fitted on its outer side with woven or non-woven fabric layer having micropores with an average pore size in the range of 1 to 400 micrometers. The filter block cum sediment filter is made by the process according to the invention.

The term "comprising" is meant not to be limiting to any subsequently stated elements but rather to encompass non-specified elements of major or minor functional importance. In other words the listed steps, elements or options need not be exhaustive. Whenever the words "including" or "having" are used, these terms are meant to be equivalent to "comprising" as defined above.

As used in this specification and the appended claims, the singular forms "a", "an", and "the" include plural referents unless the content clearly dictates otherwise. Thus, for example, reference to a composition containing "a compound" includes a mixture of two or more compounds. As used in this specification and the appended claims, the term "or" is generally employed in its sense including "and/or" unless the content clearly dictates otherwise.

For the avoidance of doubt, any feature of one aspect of the present invention may be utilised in any other aspect of the invention.

For a more complete understanding of the above and other features and advantages of the invention, reference should be made to the following detailed description of preferred embodiments.

## DETAILED DESCRIPTION OF THE INVENTION

Thus, according to the present invention there is provided a process of making a filter block cum sediment filter which includes shaped bound filter block comprising particulate filter media bound together with a binder wherein the filter block is integrally fitted on its outer side with woven or non-woven fabric layer having micropores with an average pore size in the range of 1 to 400 micrometers such that there is no air gap between the fabric filter and the filter block. Such a filter block that is provided with fabric that is integrally fitted on its outer side is suitable for use in water purifiers.

### Process of making the filter block cum sediment filter

The process comprises of moulding the filter block and the fabric sediment separately and fitting them together to form the integrally fitted filter block with the fabric on its outer side.

The process for making the filter block includes the steps of:

    (a) mixing suitable filter media for e.g. powdered activated carbon (PAC) with a binder in a mixer,
    (b) compacting the mix in a mould of desired shape and size by applying a pressure of not more 20 kg/cm$^2$ ,
    (c) heating the mould to a selected temperature,
    (d) cooling the mould and releasing the carbon block from the mould.

Process for the making the moulded fabric sediment filter includes the steps of;

    (a) moulding the sediment filter fabric, having micro-pores with an average pore size in the range of 1 to 400 micrometers into a mould of a shape corresponding to the shape and dimension of the moulded filter block by applying a temperature in the range 50 to 120°C for 10 to 30 minutes and compressing it under pressure in the range 5 to 10 kg/cm$^2$;
    (b) cooling the mould to a temperature in the range 20 to 40°C.

Process for making of the filter block cum sediment filter includes the steps of;

    (a) inserting the moulded filter block into the moulded sediment filter; and
    (b) fixing the filter block and the sediment filter covering the filter block to a base plate.

Any low shear mixer that does not significantly alter the particle size distribution may be used for mixing the filter media for e.g PAC and the binder. Preferred devices for mixing are mixer with dulled impeller blades, ribbon blender, rotary mixer. The mixing is carried out preferably for at least 15 minutes, more preferably for 20 to 60 minutes.

Shaping of the compacted mass is done using a mould of preselected size and shape and by subjecting to a pressure of not more than 20 kg/cm$^2$, preferably not more than 10 kg/cm$^2$. The pressure is preferably applied using either a hydraulic press or a pneumatic press, more preferably a hydraulic press.

The mould is made from aluminium, cast iron, steel or any suitable material capable of withstanding temperatures exceeding 400°C.

A mould release agent is preferably coated on the inside surface of the mould.

The mould is preferably heated in an oven such as a non-convection, forced air or forced inert-gas convection oven.

The sediment filter is moulded separately by using a woven or non-woven fabric of thickness in the range 1 to 10 mm and preferably 2 to 6 mm. The most preferred shape of the filter block is hemispherical and the fabric used to cover the filter block is cut into a circle with diameter such that the area of the fabric is equivalent to 10-50%, more preferably 10-20% over the surface area of the filter block which is required to be covered by the fabric. The ratio of the fabric to the size of the filter block for other shapes is suitably altered so that the coverage is perfect and the fabric and the block have identical shape and size. The fabric was fitted onto the outer surface of the hemispherical insert of required diameter and then the hemispherical insert with the fabric is inserted into the mould and compressed to a pressure in the range 5 to 10 kg/cm2. The mould is heated in an oven at a temperature in the range 50 to 120°C and preferably in the range 100-120°C for period of 10 to 30 minutes and preferably 25-30 min. The mould is cooled preferably under compression pressure to a temperature in the range 20-40°C and the shaped fabric is placed on the outer surface of the hemispherical shaped filter block that is moulded separately. The filter block and also the shaped fabric covering the filter block are stuck to the base plate using a suitable adhesive and preferably a hot melt adhesive.

Moulding of the fabric by the process of the invention provides appropriate shaping of the fabric to match the size and shape of the filter block and this ensures that the sediment filter fits perfectly and integrally on the outer surface of the filter block such that there is no air gap between the entire exterior surface of the bound block and the fibrous fabric filter media.

**Filter block**

The filter block, as manufactured using the above process, is a shaped bound block formed by binding particulate filter media with a binder. The filter block is preferably hemispherical in shape. Hemispherical filter blocks provide uniform path length at every point of the filter block enhancing filtration and ensuring long life of the filter block.

The height of the hemispherical filter block may be 20 to 100 mm, more preferably it is 40 to 80 mm and the most preferred height is 50 to 70 mm.

The filter media is preferably selected from activated carbon, diatomaceous earth, sand, clay activated alumina or ceramic. More suitable particles are sand or activated carbon, most preferred being activated carbon. Activated carbon particles are preferably selected from one or more of bituminous coal, coconut shell, wood and petroleum tar.

Surface area of the activated carbon particles preferably exceeds 500 $m^2$/g, more preferably exceeds 1000 $m^2$/g. The powdered activated carbon (PAC) is of a selected particle size distribution. Preferably 95% of the PAC particles pass through 50 mesh, more preferably 60 mesh and not more than 13% preferably not more than 12 %, more preferably not more than 10% passes through 325 mesh.

Preferably, the activated carbon has a size uniformity coefficient of less than 2, more preferably less than 1.5. It has a Carbon Tetrachloride number exceeding 50%, more preferably exceeding 60%. The activated carbon preferably has an Iodine number greater than 800, more preferably greater than 1000.

The filter block preferably has a particle size distribution profile across the depth. It is preferred that 55 to 80 wt % of the PAC particles in the particle size range of 100 to 200 mesh is localised in the inner 50 volume % of the filter block. It is further preferred that the filter block have 55 to 95 wt % of the PAC particles in the size range smaller than 200 mesh localised in the inner 50 volume % of the filter block.

The filter block also includes a binder. Binders are substances that bind the particles of the filter block and hold them together. Suitable binders include polymers and inorganic substances like white cement and resins. Polymeric binders are most preferred.

Preferably the surface coverage of the binder material is 0.5% to 10%. The binder material is preferably hydrophilic in nature. The binder material is preferably a thermoplastic polymer. Suitable examples include ultra high molecular weight polymer preferably polyethylene or polypropylene. Binders of this class are commercially available under the trade names HOSTALEN (from Ticona GmbH), GUR, Sunfine (from Asahi), Hizex (from Mitsubishi) 5 and from Brasken Corp (Brazil). Other suitable binders include low density polyethylene (LDPE) sold as Lupolen (from Basel Polyolefins) and linear low density polyethylene (LLDPE) from Qunos (Australia).

The bulk density of the binder is preferably not more than 2.5 $g/cm^3$, more preferably less than 0.6 $g/cm^3$, even more preferably less than or equal to 0.5 $g/cm^3$ and most preferably less than 0.25 $g/cm^3$.

The binder preferably has a particle size distribution similar to that of the PAC but the amount of particles passing 200 mesh is preferably less than 40 wt %, more preferably less than 30 wt %. Preferably the particle size distribution of the binder is substantially the same as that of the PAC.

The binder material is selected to have a melt flow rate (MFR) of less than 5 gram/10 minutes, preferably less than 2 gram/10 minutes, more preferably less then I gram/l0 minutes. The melt -flow rate (MFR) is measured using the ASTM D 1238 (ISO 1133) test. The test measures the flow of a molten polymer through an extrusion plastometer under specific temperature and load conditions. The extrusion plastometer consists of a vertical cylinder with a small die of 2 mm at the bottom and a removable piston at the top. A charge of material is placed in the cylinder and preheated for several minutes. The piston is placed on top of the molten polymer and its weight forces the polymer through the die and on to a collecting plate. The time interval for the test ranges from 15 seconds to 15 minutes in order to accommodate the different viscosities of plastics. Temperatures used are 190, 220, 250 and 300 degrees centigrade (428, 482 and 572 degrees Fahrenheit). Loads used are 1.2, 5, 10 and 15 kg. For the present invention the tests are done at 190 degrees centigrade at 15 kg load. The amount of polymer collected after a specific interval is weighed and normalized to the number of grams that would have been extruded in 10 minutes; melt flow rate is expressed in grams per reference time.

The proportion of the binder to the PAC particles by weight is preferably chosen between 1:1 and 1:10, more preferably between 1: 2 and 1:6.

**Sediment Filter**

The sediment filter, is a woven or non- woven fabric, more preferably a non-woven fabric having micro-pores. The fabric may be of natural or synthetic origin. Suitable filter materials are synthetic fibers more preferably polymeric fibers. Suitable polymeric materials are cotton, polyester, polypropylene, or nylon. The average pore size of the fabric is preferably in the range of 1 to 400 micrometers, more preferably in the range of 10 to 300 micrometers, most preferably in the range of 25 to 200 micrometers.

Thickness of the sediment filter fabric is preferably in the range of 1 to 10 mm, more preferably in the range of 2 to 6 mm.

The sediment filter fabric has specific liquid permeability preferably less than 4 x 10~11 m$^2$, more preferably less than 2.5 x 10~11 m$^2$ at head of 170 mm water Column. The intrinsic permeability, also called the specific permeability or absolute permeability of a fabric is a characteristic feature of the fabric structure and represents the void capacity through which a fluid can flow. The specific liquid permeability k is defined by Darcy's law as:

$$q = -\frac{k}{\mu}\frac{dp}{dx}$$

**Base Plate**

According to the invention, the filter block cum sediment filter is attached to a base plate with an orifice for the water exit. The filter block cum sediment filter is fixed to the base plate preferably using a hot melt adhesive. The base plate is preferably made of plastic such as polypropylene, polyethylene, Acrylonitrile Butadiene Styrene (ABS), Styrene Acrylonitrile (SAN).

**Method of purification**

According to another aspect of the invention there is provided a method of filtering water comprising passing water through a filter block cum sediment filter, as made by the process of the first aspect of the invention, where the water under the influence of gravity passes first through the sediment filter fabric, and then through the filter block. The invention is suited for greater than 3.5 log removal of cysts. The filter block cum sediment filter also removes greater than 95% of the suspended particles and greater than 90% of organics from the contaminated water when used for filtering water under gravity head conditions. The filter of the invention is useful to filter suspended solids having a particle size in the range of 0.01 to 500 micrometers, more preferably in the range of 0.05 to 100 micrometers. The filter of the invention has been found suitable for filtering up to 1500 litres and in preferred aspects up to 2300 litres of contaminated water under gravity head conditions while maintaining good flow rate and reduced number of interventions.

Thus, it was found that a filter block cum sediment filter as obtained by the process for its manufacture according to the present invention, upon use in the above method of purification, gives rise to a constant average flow rate of water through the filter block, while ensuring that the water does not by pass the sediment filter.

According to yet another aspect of the invention there is provided a gravity filtration device having an inlet upstream of a top chamber and an outlet downstream of a bottom chamber; the filter according to the present invention detachably attachable to base of said top chamber; such that liquid fed to the top chamber through said inlet is filtered sequentially through the sediment filter fabric and the filter block, while maintaining good flow rate and reduced number of interventions, before collecting in the bottom chamber to be dispensed through the outlet.

**DESCRIPTION OF THE FIGURES**

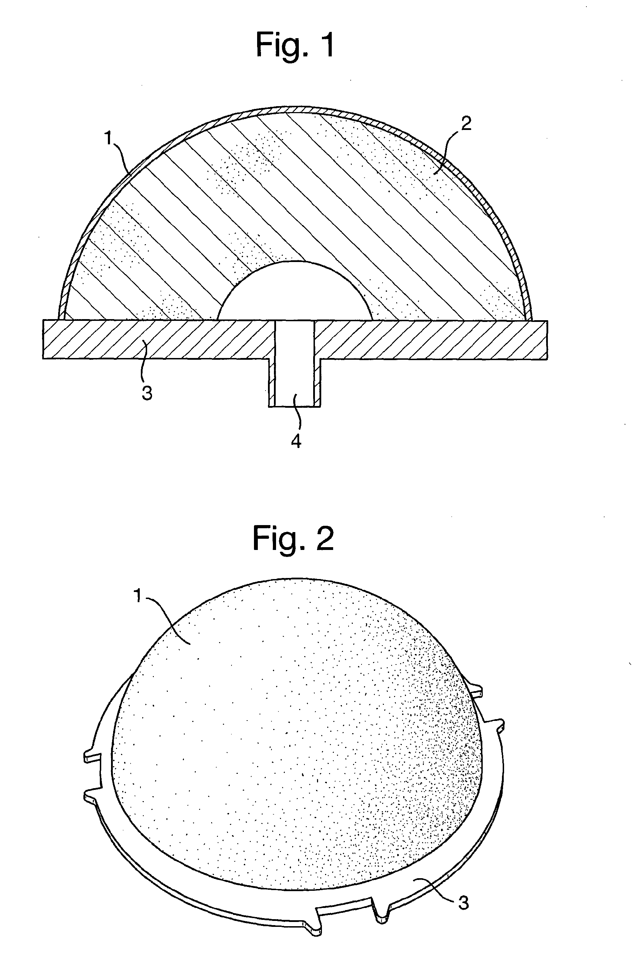

Figure 1 is a sectional view of the filter block cum sediment filter consisting of a hemispherical carbon filter block (2) with its base fitted to a base plate (3), comprising an orifice (4) for exit of water. The top of the hemispherical carbon filter block (2) consisting of a non-woven sediment filter (1) integrally fitted to the outer surface of the hemispherical carbon filter block.

Figure 2 is a filter block cum sediment filter prepared according to the present invention showing a hemispherical carbon block to which a non-woven sediment filter (1) has been integrally fitted and fixed on to a base plate (3).

It should be understood that the specific forms of the invention herein illustrated and described are intended to be representative only as certain changes may be made therein without departing from the clear teachings of the disclosure.

Although the invention has been described with reference to specific embodiments, it will be appreciated by those skilled in the art that the invention may be embodied in many other forms.

## EXAMPLES

Example 1:

### i. Preparation of a carbon block (CCT):

164 gm of activated carbon (82 gm of IAC (250 -500 micron) and 82 gm of PAC (75-250 microns), sourced from Haycarb, Srilanka, and 98 gm of deionised water were mixed to prepare a moist mixture. To this mix 28 gm of polyethylene binder (GUR 2122, TICONA, GmBH) was added and mixed thoroughly, ensuring that mixture was homogeneous in appearance. The mixture was filled into a hemispherical stainless steel mould of 12 cm diameter and closed with top lid having 4 cm hemispherical insert. This resulted in a path length of 4 cm. The mould was compressed to 10 kg/cm$^2$ pressure, with a help of hydraulic press. The mould was introduced into an oven at 250° C for 2.30 hrs. The mould was removed from the oven and cooled to ambient temperature. After cooling, the filter was demoulded and stuck to a base plate using a hot melt adhesive (HMA).

### ii. Preparation of Fabric covered carbon block (FCCT):

A carbon block was prepared as per the method described for CCT without adhering moulded carbon block to a base plate. Non-woven fabric having an average pore size of 30-60 microns of 2 mm thickness was cut into a circle with a diameter 18.5 cm. The area of the fabric was equivalent to 18% over the surface area of the hemispherical carbon block of diameter 12 cm which had to be covered by the fabric. The fabric was fitted onto the outer surface of hemispherical insert of diameter 12 cm and then the hemispherical insert with the fabric was inserted in to the mould and compressed to a pressure of 5 kg/cm$^2$. The mould was heated in an oven at 110-120° C which is below the softening temperature of the fabric material for 25-30 min. The mould was cooled under compression and the shaped fabric was placed on the outer surface of the hemispherical shaped carbon block and stuck to the base plate using a hot melt adhesive.

Example 2:

### i. Determination of flow rate:

Life time evaluation was carried out in terms of flow rate and number of interventions (Clogging frequency). An orifice of 2.4 mm diameter in the filter exit port was used to obtain the desired CCT/FCCT flow rate. The CCT and FCCT were fixed to the top chamber of gravity fed water purifier having 9 L capacity. The top chamber was filled with test water. In case of CCT, test water was first passed through the sediment filter that loosely covered the CCT whereby the water flowing out of the sediment filter was filtered through CCT, whereas, in FCCT, test water was directly filtered. To simulate a comparatively bad quality of water, the inventors prepared a "test-water". This test water contained 1000 ppm of Total Dissolved Solids (TDS) consisting of impurities like Iron, Manganese and Aluminium salts and 15 ppm of Total Suspended solids (TSS), made up of insoluble particles e.g silica of known characteristics. To measure the flow rate, the test water was filled in the top chambers of each device and allowed to pass through each stage of the purification process, and finally collected in the bottom chambers.

The average flow rate was calculated by using formula,

Average flow rate = Volume out (mL)/ time taken (min)

If the average flow rate is below 50 ml/min, then CCT/FCCT intervention is required.

### ii. Protocol for CCT/FCCT intervention

The top surface of CCT/FCCT was washed under water, by gently rubbing the surface so as to remove accumulated dirt, and then backwashed with the help of a soft polymeric bellow, till no more dirt comes out of it. The data is presented in Table 1.

Table 1

| Intervention No. | CCT | | FCCT | |
|---|---|---|---|---|
| | Litres of water passed | Average flow rate, ml/min (after backwash) | Litres of water passed | Average flow rate, ml/min (after backwash) |
| 1 | 256 | 182 | 90 | 150 |
| 2 | 416 | 167 | 180 | 150 |
| 3 | 504 | 190 | 270 | 153 |
| 4 | 568 | 154 | 351 | 150 |
| 5 | 656 | 140 | 432 | 150 |
| 6 | 712 | 130 | 522 | 151 |
| 7 | 752 | 99 | 621 | 140 |
| 8 | 776 | 103 | 720 | 148 |
| 9 | 808 | 80 | 801 | 140 |
| 10 | 832 | 95 | 882 | 143 |
| 11 | 856 | 60 | 963 | 150 |
| 12 | 872 | 44 | 1026 | 143 |
| 13 | 880 | 44 | 1116 | 145 |
| 14 | 896 | 35 | 1188 | 145 |
| 15 | 904 | 35 | 1269 | 155 |
| 16 | | | 1341 | 148 |
| 17 | | | 1422 | 148 |
| NTU of Test water | 13 | | 16 | |
| NTU of output water | 0.02 | | 0.02 | |

The results indicate that the performance of the FCCT which is according to the invention is significantly superior a filter wherein the sediment filter was not integrally fitted on the carbon block which is evident from the maintenance of the flow rate and the reduced number of interventions.

**Claims**

1.    A process for making a filter block cum sediment filter comprising:

i. moulding a filter block of a particular shape and dimension;
ii. moulding a woven or non-woven fabric, having micropores with an average pore size in the range of 1 to 400 micrometers, into a shape corresponding to the shape and dimension of the moulded filter block by shaping the fabric in the mould and heating it to a temperature in the range of 50 to 120°C for 10 to 30 minutes and compressing it under pressure in the range of 5 to 10 kg/cm$^2$;
iii. cooling the mould to a temperature in the range of 20 to 40°C;
iv. inserting the moulded filter block into the moulded fabric; and
v. fixing the filter block covered by the fabric layer to a base plate.

2.    A process for making a filter block cum sediment filter as claimed in claim 1, wherein the shape of the filter block is hemispherical.

**3.** A process for making a filter block cum sediment filter as claimed in claim 1, wherein the area of the fabric used for moulding is 10 - 50% more than the surface area of the filter block.

**4.** A process for making a filter block cum sediment filter as claimed in claim 1, wherein the filter block comprises powdered activated carbon (PAC) having particle size in the range of 6 to 325 mesh and a binder material.

**5.** A process for making a filter block cum sediment filter as claimed in claim 1, wherein the binder is a Polymeric binder having a Melt Flow Rate (MFR) of less than 5 g/10 minutes.

**6.** A filter block cum sediment filter, including shaped bound filter block comprising particulate filter media bound together with a binder wherein the filter block is integrally fitted on its outer side with woven or non-woven fabric layer having micropores with an average pore size in the range of 1 to 400 micrometers, wherein the filter block cum sediment filter is obtained by the process according to claim 1.

**Patentansprüche**

**1.** Verfahren zum Herstellen eines Filterblocks mit Sedimentfilter, der Folgendes umfasst:

i. Formen eines Filterblocks einer bestimmten Form und Abmessung;
ii. Formen eines gewebten oder nicht gewebten Stoffes, der Mikroporen mit einer durchschnittlichen Porengröße im Bereich von 1 bis 400 Mikrometern besitzt, in eine Form, die der Form und der Abmessung des geformten Filterblocks entspricht, indem der Stoff in der Form geformt wird und bei einer Temperatur im Bereich von 50 bis 120 °C für 10 bis 30 Minuten erwärmt und unter einem Druck im Bereich von 5 bis 10 kg/cm$^2$ verdichtet wird;
iii. Abkühlen der Form auf eine Temperatur im Bereich von 20 bis 40 °C;
iv. Einsetzen des geformten Filterblocks in den geformten Stoff und
v. Befestigen des Filterblocks, der durch die Stoffschicht bedeckt ist, an einer Grundplatte.

**2.** Verfahren zum Herstellen eines Filterblocks mit Sedimentfilter nach Anspruch 1, wobei die Form des Filterblocks halbkugelförmig ist.

**3.** Verfahren zum Herstellen eines Filterblocks mit Sedimentfilter nach Anspruch 1, wobei die Fläche des Stoffes, die für das Formen verwendet wird, 10-50 % größer als die Oberfläche des Filterblocks ist.

**4.** Verfahren zum Herstellen eines Filterblocks mit Sedimentfilter nach Anspruch 1, wobei der Filterblock staubförmige Aktivkohle (PAC), die eine Partikelgröße im Bereich von 6 bis 325 Mesh hat, und ein Bindemittelmaterial umfasst.

**5.** Verfahren zum Herstellen eines Filterblocks mit Sedimentfilter nach Anspruch 1, wobei das Bindemittel ein Polymerbindemittel ist, das eine Schmelze-Massefließrate (MFR) von weniger als 5 g/10 Minuten hat.

**6.** Filterblock mit Sedimentfilter, der einen geformten gebundenen Filterblock einschließt, der Teilchenfiltermedien umfasst, die mit einem Bindemittel zusammen gebunden sind, wobei der Filterblock auf seiner äußeren Seite einteilig mit einer gewebten oder nicht gewebten Stoffschicht versehen ist, die Mikroporen mit einer durchschnittlichen Porengrößen im Bereich von 1 bis 400 Mikrometern hat, wobei der Filterblock mit Sedimentfilter durch das Verfahren nach Anspruch 1 erhalten wird.

**Revendications**

**1.** Procédé de fabrication d'un filtre de sédiment avec bloc de filtre comprenant :

i. le moulage d'un bloc de filtre d'une forme et d'une dimension particulières ;
ii. le moulage d'un textile tissé ou non tissé, présentant des micropores avec une taille moyenne de pore dans l'intervalle de 1 à 400 micromètres, dans une forme correspondant à la forme et à la dimension du bloc de filtre moulé par façonnage du textile dans le moule et chauffage de celui-ci à une température dans l'intervalle de 50 à 120°C pendant de 10 à 30 minutes et par compression de celui-ci sous une pression dans l'intervalle de 5 à 10 kg/cm$^2$ ;
iii. le refroidissement du moule à une température dans l'intervalle de 20 à 40°C ;

iv. l'insertion du bloc de filtre moulé dans le textile moulé ; et

v. la fixation du bloc de filtre recouvert par la couche de textile sur une plaque de base.

2. Procédé de fabrication d'un filtre de sédiment avec bloc de filtre selon la revendication 1, dans lequel la forme du bloc de filtre est hémisphérique.

3. Procédé de fabrication d'un filtre de sédiment avec bloc de filtre selon la revendication 1, dans lequel la surface du textile utilisé pour le moulage est de 10 - 50 % supérieure à la surface spécifique du bloc de filtre.

4. Procédé de fabrication d'un filtre de sédiment avec bloc de filtre selon la revendication 1, dans lequel le bloc de filtre comprend du charbon actif pulvérulent (PAC) présentant une taille de particule dans l'intervalle de 6 à 325 mesh et un matériau de liant.

5. Procédé de fabrication d'un filtre de sédiment avec bloc de filtre selon la revendication 1, dans lequel le liant est un liant polymère présentant un Indice de fusion (MFR) Inférieur à 5 g/10 minutes.

6. Filtre de sédiment avec bloc de filtre, comprenant un bloc de filtre lié façonné comprenant un milieu de filtre particulaire lié avec un liant dans lequel le bloc de filtre est intégralement fixé sur son côté externe à une couche de textile tissé ou non tissé présentant des micropores dans une taille moyenne de pore dans l'intervalle de 1 à 400 micromètres, dans lequel le filtre de sédiment avec bloc de filtre est obtenu par le procédé selon la revendication 1.

# Fig. 1

# Fig. 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2390987 A
- IN 195421
- WO 2005094966 A
- EP 2161067 A